# FASCICULE DE BREVET EUROPEEN

(11) **EP 2 266 285 B1**
(45) Date de publication et mention de la délivrance du brevet: **10.08.2016**
(21) Numéro de dépôt: 09730399.4
(22) Date de dépôt: 30.03.2009
(51) Int. Cl.: H04L 29/06

(54) **PROCEDE DE TERMINAISON D'UN APPEL ET TERMINAL DE VOIX SUR IP**
VERFAHREN ZUR BEENDUNG EINES RUFS UND VOICE-OVER-IP-ENDGERÄT
METHOD OF TERMINATING A CALL AND VOICE-OVER-IP TERMINAL

(30) Priorité: 28.03.2008 FR 0852046
(43) Date de publication de la demande: 29.12.2010
(73) Titulaire: Orange, 75015 Paris (FR)
(72) Inventeur: LE ROUZIC, Jean-Claude, F-22560 Trebeurden (FR); PERON, Pierrick, F-22300 Lannion (FR)
(74) Mandataire: Pecher, Gilles
(86) Numéro de dépôt international: PCT/FR2009/050531
(87) Numéro de publication internationale: WO 2009/125149

(56) Documents cités:
- WO-A-02/067533
- HANDLEY M ET AL: "RFC 2543 SIP: Session Initiation Protocol" 1 mars 1999 (1999-03-01), 19990301; 19990300 , XP015008326 abrégé alinéa [4.2.4]

## Description

### Arrière-plan de l'invention

La présente invention se rapporte au domaine général des télécommunications et notamment des communications sur Internet.

Elle concerne plus particulièrement les mécanismes de terminaison d'un appel émis ou reçu par un terminal adapté à communiquer selon un protocole de voix sur IP (Internet Protocol), comme par exemple un téléphone implémentant le protocole SIP (Session Initiation Protocol). Un tel terminal est aussi connu sous l'appellation de terminal de voix sur IP ou terminal VoIP (Voice over IP).

Dans l'état actuel de la technique, suite au raccrochage d'un terminal de voix sur IP, les ressources allouées à l'appel au niveau du terminal et plus généralement dans le réseau sont libérées immédiatement et la communication entre les deux interlocuteurs définitivement terminée.

Par conséquent, si ce raccrochage est lié à une mauvaise manipulation du terminal VoIP, du fait par exemple d'un appui fortuit sur la touche de raccrochage du terminal ou d'une retombée accidentelle du combiné du terminal sur son socle lors du décrochage, l'utilisateur du terminal VoIP n'a d'autre solution que de rappeler son interlocuteur pour reprendre sa conversation.

Dans les réseaux de télécommunications traditionnels à commutation temporelle (Réseau Téléphonique Commuté ou réseau RTC), il existe un mécanisme dit de « raccrochage/redécrochage » qui offre la possibilité à un abonné appelé de raccrocher son combiné téléphonique puis de décrocher le même combiné ou un autre combiné dans un laps de temps déterminé, sans que la communication avec son interlocuteur ne soit coupée. La mise en oeuvre d'un tel mécanisme dans un réseau RTC, s'appuie sur des échanges de messages de suspension d'appel entre l'unité de raccordement de l'abonné et son autocommutateur de raccordement.

Or, de par l'architecture et la conception des réseaux de voix sur IP, de tels échanges n'existent pas dans les protocoles de voix sur IP ainsi que décrit dans le document RFC 2543 : SIP : Session Initiation Protocol. En conséquence, ceci implique que chaque mauvaise manipulation d'un combiné de terminal de voix sur IP au cours d'un appel se traduit irrémédiablement aujourd'hui par une libération des ressources associées à l'appel.

### Objet et résumé de l'invention

Selon un premier aspect, la présente invention vise un procédé de terminaison d'un appel selon la revendication 1.
Conformément à l'invention, le procédé de terminaison comporte en outre, suite à l'étape de détection, une étape d'attente d'une durée prédéterminée avant l'envoi du message de libération, le message de libération étant envoyé à l'issue de cette étape d'attente si aucun décrochage du terminal n'a été détecté pendant cette durée prédéterminée.

Par souci de simplification et de clarté, la durée prédéterminée considérée dans l'invention sera appelée « durée de temporisation » par la suite.

L'invention propose ainsi un mécanisme simple, mis en oeuvre au niveau d'un terminal VoIP (appelant ou appelé), et permettant de reprendre une communication interrompue momentanément suite par exemple au raccrochage accidentel du terminal, sans devoir allouer de nouvelles ressources à la communication.

En effet, conformément à l'invention, l'envoi du message de libération des ressources allouées à l'appel est différé pendant une durée prédéterminée. Un tel message est par exemple un message utilisant la méthode BYE dans le cas du protocole SIP.

L'envoi et la réception du message de libération des ressources, respectivement par le terminal et par le coeur du réseau IP, mettent ordinairement fin à la communication, le réseau et les terminaux impliqués dans l'appel libérant alors les ressources allouées à cet appel. Dans l'invention, avantageusement, du fait de la non-émission du message de libération pendant la durée de temporisation, la totalité des ressources allouées pour l'appel sont maintenues suite au raccrochage. De cette sorte, en réponse à un décrochage du terminal pendant la durée de temporisation (c'est-à-dire plus précisément à un « redécrochage » du terminal), la communication peut reprendre de façon transparente pour le réseau et les utilisateurs participant à la communication.

Par ailleurs, comme décrit précédemment, le procédé de terminaison selon l'invention est mis en oeuvre au niveau du terminal et utilise avantageusement les capacités d'un terminal VoIP, à savoir notamment la gestion par le terminal VoIP (par exemple par un automate SIP de ce terminal) de ses propres états (détection d'un raccrochage, décrochage, etc.). L'invention requiert donc uniquement la mise en oeuvre d'un temporisateur interne au terminal VoIP, afin de différer l'envoi du message de libération des ressources. Il n'est ainsi pas nécessaire de mettre en oeuvre des échanges de messages de signalisation autres que ceux déjà existant entre le terminal VoIP et le coeur de réseau IP au cours d'un appel.

En outre, de façon avantageuse, la présente invention ne requiert pas l'utilisation de méthodes complexes entre le terminal et le coeur de réseau, telles que par exemple les méthodes SUBSCRIBE ou NOTIFY pour le protocole SIP, méthodes particulièrement gourmandes en termes de ressources et qui rendent souvent difficile et problématique la gestion des réseaux de voix sur IP.

Dans un mode particulier de réalisation de l'invention, la durée prédéterminée (i.e. durée de temporisation), prise en compte dans le procédé de terminaison, est fixée dans un message reçu par le terminal VoIP provenant d'un dispositif du coeur de réseau IP.

Ainsi, il est possible au coeur du réseau de voix sur IP de fixer la durée de temporisation prise en compte par le terminal avant d'envoyer le message de libération suite à un raccrochage. L'opérateur du réseau pourra de la sorte fixer une durée de temporisation similaire pour tous les terminaux enregistrés auprès de lui, de sorte à uniformiser les services associés aux différents terminaux.

Au contraire, en variante, l'opérateur du réseau pourra adapter la durée de temporisation en fonction du type du terminal. Par exemple, il pourra envoyer avantageusement à un terminal une durée de temporisation plus longue qu'une durée moyenne lorsque ce terminal est considéré comme particulièrement propice au raccrochage accidentel, et inversement.

A titre d'exemple, lorsque le terminal VoIP est un terminal appelé pour ledit appel, le message reçu fixant la durée prédéterminée de temporisation peut être un message d'initiation de cet appel.

En variante, lorsque le terminal VoIP est un terminal appelant pour ledit appel, le message reçu fixant la durée de temporisation prédéterminée peut être un message de notification d'un appel en cours ou un message de notification d'un décrochage par un terminal appelé pour ledit appel.

Dans une autre variante encore, le message reçu fixant la durée de temporisation prédéterminée peut être un message de réponse à une requête d'enregistrement du terminal auprès du coeur de réseau.

La durée de temporisation pourra notamment être comprise dans un entête de l'un de ces messages. Ainsi, de façon très avantageuse, il n'est pas nécessaire de créer de nouveaux messages (i.e. dans le cas du protocole SIP, la création de nouvelles méthodes) pour informer le terminal de la durée de temporisation à appliquer dans le cadre du procédé de terminaison selon l'invention.

Dans un autre mode de réalisation de l'invention, la durée prédéterminée est configurable au niveau du terminal.

De cette sorte, l'utilisateur du terminal peut, en fonction de ses besoins et de ses attentes, modifier la durée de temporisation à appliquer au cours du procédé selon l'invention. Cela peut se faire notamment grâce à la mise en oeuvre d'un menu approprié dans le terminal, accessible par exemple à l'aide du clavier de ce terminal.

Dans un autre mode de réalisation de l'invention, la durée prédéterminée est prédéfinie dans le terminal. Par exemple, cette durée pourra être prédéfinie par le constructeur du terminal et stockée dans une mémoire non volatile et non réinscriptible ou dans une mémoire morte du terminal VoIP.

Corrélativement, l'invention vise également un terminal de voix sur IP, enregistré auprès d'un coeur de réseau IP et comportant :
- des moyens de détection d'un raccrochage du terminal au cours d'un appel ; et
- des moyens d'envoi à un dispositif du coeur de réseau IP d'un message de libération des ressources allouées à l'appel.
Conformément à l'invention, le terminal de voix sur IP comporte en outre :
- des moyens de temporisation de l'envoi du message de libération pendant une durée prédéterminée suite à une détection d'un raccrochage par les moyens de détection ; et
- des moyens de détection d'un décrochage du terminal ;
et est remarquable en ce que les moyens d'envoi du message de libération sont adaptés à envoyer le message de libération au dispositif du coeur de réseau à l'issue de la durée prédéterminée, si aucun décrochage n'a été détecté par les moyens de détection d'un décrochage pendant la durée prédéterminée.

Dans un mode particulier de réalisation, ledit terminal de voix sur IP comprend un équipement téléphonique analogique raccordé à un convertisseur/adaptateur protocolaire de voix sur IP.

Dans un mode particulier de réalisation, les différentes étapes du procédé de terminaison d'un appel selon l'invention sont déterminées par des instructions de programmes d'ordinateurs.

En conséquence, l'invention vise aussi un programme d'ordinateur sur un support d'informations, ce programme étant susceptible d'être mis en oeuvre dans un terminal de voix sur IP conforme à l'invention ou plus généralement dans un ordinateur, ce programme comportant des instructions adaptées à la mise en oeuvre des étapes d'un procédé de terminaison d'un appel tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un second aspect l'invention vise également un système de communications comprenant un terminal de voix sur IP tel que décrit précédemment et :
- des moyens pour recevoir du terminal, un message comportant une indication que le terminal est adapté à attendre une durée prédéterminée avant d'émettre un message de libération des ressources liées à un appel suite à une détection d'un raccrochage du terminal au cours de l'appel, et à envoyer le message de libération à l'issue de la durée prédéterminée si aucun décrochage n'a été détecté pendant la durée prédéterminée ;
- des moyens pour obtenir ladite durée prédéterminée ; et
- des moyens pour envoyer cette durée prédéterminée au terminal dans un message ;
ces moyens étant répartis dans un ou plusieurs dispositifs d'un coeur de réseau de communications IP du système.

Selon un troisième aspect, l'invention vise aussi un signal comprenant un message et envoyé par un terminal de voix sur IP à un dispositif d'un coeur d'un réseau de communications IP, remarquable en ce que le message comporte un entête comprenant une indication que le terminal est adapté à attendre une durée prédéterminée avant d'émettre un message de libération des ressources liées à un appel, suite à une détection d'un raccrochage du terminal au cours de cet appel, et à envoyer le message de libération à l'issue de ladite durée prédéterminée si aucun décrochage n'a été détecté pendant la durée prédéterminée.

Dans un mode particulier de réalisation, le signal comporte en outre un autre entête comprenant une valeur pour cette durée prédéterminée.

### Brève description des dessins

D'autres caractéristiques et avantages de la présente invention ressortiront de la description faite ci-dessous, en référence aux dessins et à l'annexe qui en illustrent un exemple de réalisation dépourvu de tout caractère limitatif et dans lesquels :
- la figure 1 représente, dans son environnement, un terminal de voix sur IP conforme à l'invention dans un mode particulier de réalisation de l'invention ;
- la figure 2 représente sous forme d'organigramme, les principales étapes mises en oeuvre au cours du procédé de terminaison selon l'invention, lorsqu'il est mis en oeuvre par un terminal de voix sur IP tel que représenté sur la figure 1 ;
- la figure 3 représente de façon schématique, les principales étapes mises en oeuvre dans un premier mode de réalisation pour configurer, sous le contrôle du coeur de réseau IP, la durée de temporisation appliquée par le terminal de voix sur IP au cours du procédé de terminaison ;
- la figure 4 représente de façon schématique, les principales étapes mises en oeuvre dans un second mode de réalisation pour configurer, sous le contrôle du coeur de réseau IP, la durée de temporisation appliquée par le terminal de voix sur IP au cours du procédé de terminaison ; et
- l'annexe fournit un exemple de message pouvant être compris dans un signal conforme à l'invention ainsi qu'un exemple de message permettant à un dispositif du coeur de réseau de fixer la durée de temporisation, dans une mise en oeuvre de l'invention utilisant le protocole SIP.

### Description détaillée de modes de réalisation

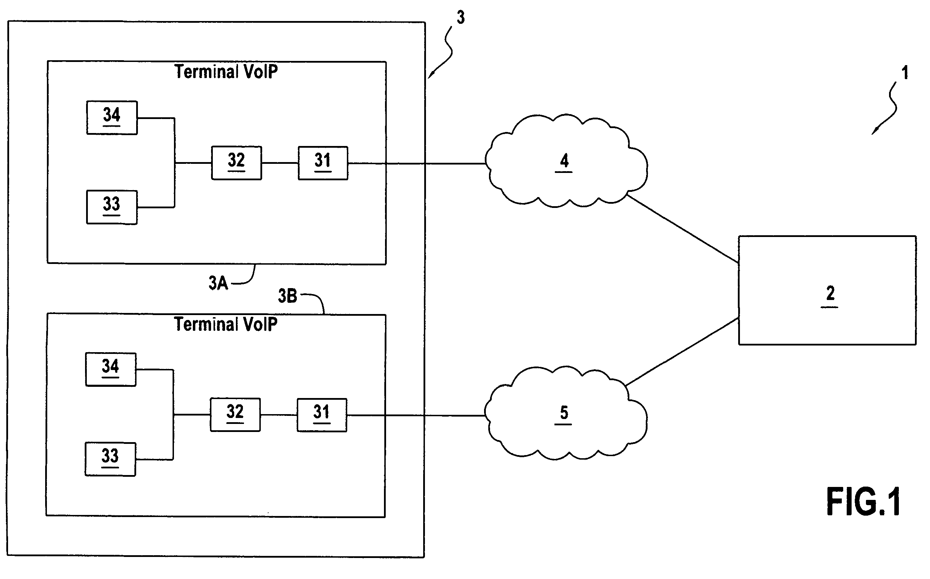

La **figure 1** représente un réseau de communication 1 de voix sur IP.

Dans l'exemple considéré ici, le réseau de communication 1 est basé sur une architecture de type IMS (IP Multimedia Subsystem), telle que spécifiée notamment dans les standards de normalisation 3GPP et TISPAN. De façon connue en soi, un tel réseau offre des services de voix sur IP basés sur une implémentation du protocole SIP (Session Initiation Protocol). L'invention peut bien entendu s'appliquer à d'autres types d'architecture permettant le support de la voix sur IP, comme par exemple une architecture de type commutateur logiciel (aussi communément appelé « softswitch ») ou de type « proxy registrar ».

Le réseau de communication 1 comprend un coeur de réseau IMS 2 (ou « IMS core » en anglais) ainsi qu'une pluralité de terminaux 3 (par exemple les terminaux 3A et 3B), pouvant se connecter au réseau IMS 1 selon divers réseaux d'accès, après enregistrement préalable auprès de celui-ci.

Les deux terminaux 3A et 3B considérés ici sont des terminaux de voix sur IP conformes à l'invention. Ces terminaux sont par exemple des téléphones SIP de voix sur IP. En variante, d'autres terminaux peuvent être envisagés : il peut s'agir par exemple d'un ordinateur portable muni d'un microphone et d'enceintes, ou d'un équipement téléphonique analogique raccordé à un convertisseur/adaptateur protocolaire de voix sur IP tel qu'une passerelle domestique ou une passerelle SIP ("DSLAM SIP") selon la norme ETSI TS 183 043. De façon connue, les terminaux de voix sur IP 3A et 3B sont adaptés à communiquer selon le protocole SIP avec le coeur de réseau 2 et intègre un automate SIP de traitement d'appel (user agent), non représenté sur la figure 1, capable de détecter l'état du terminal.

Les terminaux 3A et 3B ont l'architecture matérielle d'un ordinateur et comportent notamment des moyens de communication 31 via un réseau d'accès (via respectivement le réseau d'accès 4 et le réseau d'accès 5), un processeur 32, une mémoire vive 33 et une mémoire morte 34, ainsi qu'une horloge permettant de cadencer des opérations et de mesurer une durée prédéterminée (non représentée sur la figure).

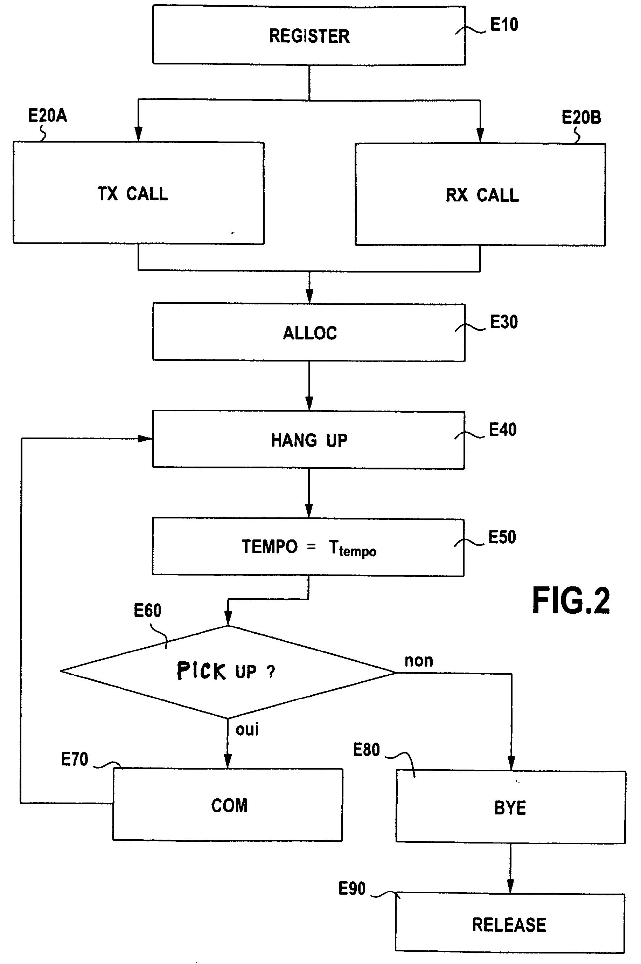

La mémoire morte 34 du terminal 3A, respectivement du terminal 3B, décrit ici, comporte un programme informatique adapté à exécuter les principales étapes du procédé de terminaison d'un appel selon l'invention représentées sur la figure 2 décrite ultérieurement. Se trouve également stockée dans la mémoire 34 du terminal 3A, respectivement du terminal 3B, une durée de temporisation T_{déf} prédéfinie par défaut au niveau du terminal 3A, respectivement au niveau du terminal 3B. Dans l'exemple décrit ici, on considèrera la même durée de temporisation par défaut pour les deux terminaux 3A et 3B, par exemple T_{déf}=10s.

Les réseaux d'accès 4 et 5 respectifs des terminaux 3A et 3B envisagés ici sont des réseaux d'accès de type ADSL (Asymmetric Digital Subscriber Line). En variante, d'autres réseaux d'accès pourraient être considérés pour connecter le terminal VoIP 3A et/ou 3B au réseau IMS 1, tels que notamment un réseau UMTS (Universal Mobile Télécommunications System), un réseau WLAN (Wireless Local Area Network ou réseau local sans fil) ou un réseau WIFI (WIreless FIdelity).

Par ailleurs, l'invention s'applique également avantageusement lorsque l'un seulement des terminaux 3A et 3B est un terminal de voix sur IP conforme à l'invention, l'autre terminal pouvant être par exemple un terminal connecté à un réseau d'accès RTC analogique.

De façon connue, le coeur de réseau IMS 2 comprend diverses entités fonctionnelles (non représentées sur la figure 1), à savoir notamment une entité CSCF (Call Session Control Function), une entité MRFC (Multimedia Resource Function Controller), une entité BGCF (Breakout Gateway Control Function) et une entité MGCF (Media Gateway Controller Function). Ces entités sont décrites plus en détails dans le document TISPAN, « ES 282 007 IP Multimedia Subsytem (IMS) : Functional architecture NGN IMS Architecture », ETSI, Technical Report, 2006, par exemple.

L'entité CSCF est en charge de l'établissement, du contrôle et de la libération des sessions multimédia dans le réseau IMS 1, et donc en particulier des sessions de voix sur IP. Elle gère notamment les interactions avec les terminaux des utilisateurs. De façon connue, l'entité CSCF comprend :
- un Proxy-CSCF (P-CSCF), point d'entrée (en général) du terminal sur le réseau de communication IMS 1 ;
- un Serving-CSCF (S-CSCF), noeud central de la signalisation dans le réseau IMS qui gère notamment les enregistrements des terminaux au réseau IMS ; et
- un Interrogating-CSCF (I-CSCF) adapté à gérer les connexions entre les terminaux au sein du réseau IMS.
Un appel entre deux terminaux du réseau IMS 1 traverse les entités fonctionnelles P-CSCF, S-CSCF et I-CSCF.

Dans les modes de réalisation décrits ici, l'entité S-CSCF du coeur de réseau 2 comporte une mémoire dans laquelle est stockée une durée de temporisation Tₜₑₘₚₒ, fixée de façon homogène pour l'ensemble des terminaux du réseau IMS 1 implémentant le procédé de terminaison selon l'invention. En variante, cette durée de temporisation peut varier en fonction des terminaux au sein du réseau IMS 1.

Par souci de simplification, on considèrera ici que les terminaux 3A et 3B dépendent du même serveur P-CSCF et du même serveur S-CSCF. L'invention est bien sûr transposable aisément au cas où les terminaux 3A et 3B sont associés à des serveurs P-CSCF et S-CSCF distincts.

Nous allons maintenant décrire, en référence à la **figure 2****,** les principales étapes du procédé de terminaison d'un appel selon l'invention, lorsqu'elles sont mises en oeuvre par un terminal conforme à l'invention (appelé ou appelant), dans le réseau IMS de communications 1.

A cette fin, on considère de façon non limitative, un appel émis par le terminal appelant 3A à destination du terminal appelé 3B. Comme décrit précédemment, l'invention s'applique indifféremment à un terminal appelant et/ou à un terminal appelé, un terminal pouvant être bien entendu tantôt terminal appelant tantôt terminal appelé.

De façon connue, pour pouvoir communiquer sur le réseau IMS 1, un terminal VoIP doit s'enregistrer auprès du coeur de réseau IMS 2.

A cette fin, le terminal 3A envoie une requête d'enregistrement SIP REGISTER au coeur de réseau 2 (étape E10). De façon connue de l'homme du métier, cette requête est reçue par le serveur P-CSCF et transmise au serveur S-CSCF par l'intermédiaire du I-CSCF.

Sur réception de ce message, le serveur S-CSCF du coeur de réseau 2 mémorise l'enregistrement du terminal 3A et attribue une durée d'enregistrement au terminal 3A (par exemple 1h). Il envoie cette durée d'enregistrement au terminal 3A en réponse au message de requête.

Le terminal 3B s'enregistre de façon similaire auprès du coeur de réseau 2.

On suppose maintenant que l'utilisateur du terminal 3A décroche son terminal pour appeler le terminal 3B. Ce décrochage est détecté par l'automate SIP du terminal 3A. Le terminal 3A émet alors un message d'initiation d'appel SIP INVITE vers le coeur de réseau 2 pour établir un appel avec le terminal 3B (étape E20A).

Ce message d'initiation d'appel transite par le serveur P-CSCF du coeur de réseau 2 jusqu'au serveur S-CSCF où il est traité. Le serveur S-CSCF transmet le message d'initiation d'appel, après l'invocation éventuelle de serveurs d'application, vers le terminal appelé 3B.

Sur réception de ce message d'initiation d'appel, on suppose que l'utilisateur du terminal 3B décroche son terminal afin d'établir l'appel avec le terminal 3A (étape E20B). Ce décrochage est détecté par l'automate SIP du terminal 3B et signalé au serveur S-CSCF du coeur de réseau 2 qui en informe à son tour le terminal 3A.

En réponse au décrochage du terminal 3B, des ressources sont allouées de façon connue en soi pour l'appel dans le coeur de réseau 2 et au niveau des terminaux VoIP 3A et 3B respectivement (étape E30). De telles ressources sont par exemple, au niveau du coeur de réseau 2, liées à la signalisation (ex. réservation de contextes dans chaque noeud du réseau traversé par l'appel) et aux flux media (ex. autorisations de passage des flux media associés à l'appel). Au niveau de chaque terminal VoIP, les ressources allouées sont notamment des ressources liées à la restitution des flux media et des ressources liées au traitement de la signalisation d'appel par l'automate SIP du terminal.

On envisage maintenant que le terminal 3B est raccroché par son utilisateur au cours de l'appel ainsi établi. Ce raccrochage est détecté immédiatement, de façon connue, par l'automate SIP de traitement d'appel du terminal 3B (étape E40).

Sur détection de ce raccrochage, un temporisateur interne au terminal 3B est armé pour une durée prédéterminée égale à une durée de temporisation Tₜₑₘₚₒ (étape E50), à l'aide par exemple de l'horloge du terminal 3B. Sur armement de ce temporisateur, l'émission du message de libération des ressources classiquement envoyé par l'automate SIP d'un terminal de voix sur IP après détection d'un raccrochage (message SIP BYE) est différé, et ce pendant une période égale à la durée de temporisation Tₜₑₘₚₒ.

Cette durée de temporisation Tₜₑₘₚₒ aura été avantageusement configurée dans le terminal 3B, au cours d'une étape préliminaire. A cette fin, plusieurs options de configuration peuvent être implémentées.

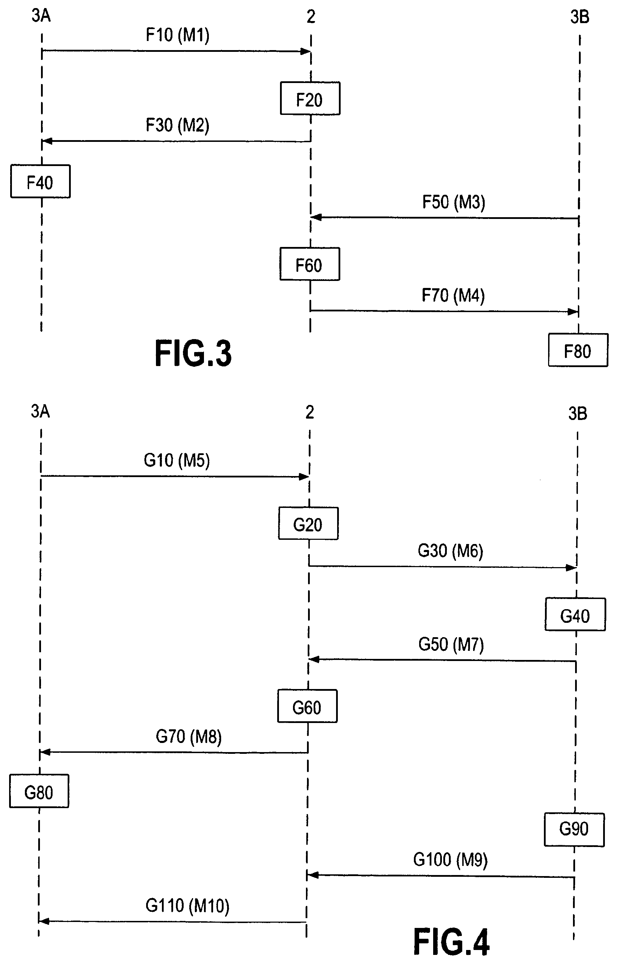

Par exemple, la durée de temporisation Tₜₑₘₚₒ appliquée dans le procédé de terminaison selon l'invention peut être fixée par un dispositif du coeur du réseau de voix sur IP 2 (par exemple par le serveur S-CSCF) et transmise dans un message approprié au terminal. Deux modes de réalisation implémentant cette option de configuration seront décrits plus en détails ultérieurement en référence aux figures 3 et 4.

Cette hypothèse n'est toutefois en aucun cas limitative, d'autres options pour configurer la durée de temporisation pouvant être mises en oeuvre. Notamment, la durée de temporisation Tₜₑₘₚₒ peut être prédéfinie dans le terminal VoIP, c'est-à-dire par exemple codée en dur dans une mémoire non volatile et non réinscriptible du terminal. La durée ainsi codée en dur pourra être égale notamment à la durée classiquement appliquée aujourd'hui dans les réseaux traditionnels à commutation temporels (ex. 4s pour le réseau Orange en France).

En variante, la durée de temporisation Tₜₑₘₚₒ peut être configurable au niveau du terminal VoIP, par exemple par un utilisateur du terminal à l'aide d'un menu approprié par l'intermédiaire d'une interface web et du clavier du terminal ou de toute autre interface entre l'utilisateur et le terminal.

Dans une autre variante de réalisation encore, les trois options précitées pour configurer la durée de temporisation Tₜₑₘₚₒ, à savoir :
- durée de temporisation fixée par le réseau et reçue dans un message envoyé par le coeur de réseau 2 (option 1) ;
- durée de temporisation prédéfinie dans le terminal (option 2) ; et
- durée de temporisation configurable au niveau du terminal (option 3) ;
peuvent être mises en oeuvre simultanément au niveau du terminal VoIP. Dans ce cas, un ordre de priorité entre chacune de ces options sera préférentiellement implémenté pour sélectionner au niveau du terminal la durée de temporisation Tₜₑₘₚₒ à appliquer, par exemple dans l'ordre option 1, option 3 puis option 2.

Ainsi, conformément à l'invention, au cours de l'étape E50 de temporisation, les ressources allouées à l'appel par le coeur de réseau 2 et par les terminaux 3A et 3B sont maintenues, l'envoi du message SIP de libération des ressources (message BYE) par le terminal 3B ayant été différé. En particulier, les ressources allouées pour l'appel au niveau du terminal 3B, comme par exemple les ressources destinées à la restitution des flux media par le terminal 3B et les ressources liées au traitement de la signalisation d'appel par l'automate SIP de traitement d'appel du terminal 3B, sont maintenues. Autrement dit, au cours de l'étape E50 de temporisation, le terminal 3B se place dans un état d'attente d'une détection d'un décrochage (étape E60) ou de l'expiration du temporisateur.

Si avant l'expiration de la temporisation Tₜₑₘₚₒ, l'automate SIP du terminal 3B détecte un décrochage du terminal 3B (i.e., un « redécrochage » du terminal 3B), alors la communication avec le terminal 3A reprend de façon transparente pour le coeur de réseau 2 et les utilisateurs des terminaux 3A et 3B (étape E70). Le temporisateur est désarmé et l'envoi à ce stade du message de libération BYE est annulé.

Dans le cas contraire (par exemple suite à un raccrochage volontaire du terminal 3B à la fin de la communication), i.e., si la temporisation expire et que l'automate SIP du terminal 3B n'a pas détecté de décrochage du terminal 3B (i.e., un « redécrochage » du terminal 3B), alors un message de libération des ressources utilisant la méthode SIP BYE est envoyé par le terminal 3B au coeur de réseau 2 (étape E80), et les ressources allouées par le terminal 3B sont libérées (étape E90).

Sur réception du message de libération BYE, le coeur de réseau 2 libère les ressources allouées dans le réseau à l'appel et transfère le message de libération au terminal 3A. Sur réception de ce message, les ressources allouées par le terminal 3A à l'appel sont immédiatement relâchées. Par ailleurs si un temporisateur a été armé conformément à l'invention, suite au raccrochage du terminal 3A (par exemple de façon légèrement décalée - i.e., en retard - par rapport au raccrochage du terminal 3B), ce temporisateur est également désarmé.

Dans un autre mode de réalisation, les terminaux 3A et/ou 3B comprennent en outre un bouton de raccrochage immédiat, qui sur invocation provoque l'émission immédiate du message de libération BYE des ressources sans attendre l'expiration de la temporisation. Ce bouton peut notamment n'être actif que pour les appels sortants (par exemple une LED clignotante dans le bouton pourrait indiquer à l'utilisateur du terminal appelant l'activation de la fonction associée au bouton « raccrochage immédiat »), ce qui permet à l'utilisateur appelant de pouvoir libérer immédiatement un appel qu'il a initié, par exemple pour éviter une facturation potentielle associée à la temporisation.

Nous allons maintenant décrire, en référence aux **figures 3 et 4****,** deux modes de réalisation visant à configurer, sous le contrôle du coeur de réseau IMS 2, la durée de temporisation Tₜₑₘₚₒ utilisée par un terminal de voix sur IP (par exemple par le terminal 3A ou le terminal 3B) lors de la mise en oeuvre du procédé de terminaison selon l'invention.

Dans le premier mode de réalisation décrit en référence à la figure 3, la durée de temporisation Tₜₑₘₚₒ est configurée dans le terminal, sous le contrôle du coeur de réseau 2, au moment de l'enregistrement de ce terminal auprès du réseau IMS 1.

Afin de s'enregistrer auprès du réseau, comme décrit précédemment, le terminal VoIP 3A envoie au coeur de réseau 2 un message M1 de requête d'enregistrement en utilisant la méthode SIP REGISTER (étape F10). Ce message est transporté sur le réseau dans un signal conforme à l'invention.

Le message SIP REGISTER M1 comporte plusieurs entêtes, dont notamment un entête « Supported », qui indique, de façon générale, à l'aide d'identifiants spécifiques aussi appelés tags d'option (« option tags » en anglais) et prédéfinis auprès de l'IANA (Internet Assigned Number Authority), les différents services supportés par le terminal 3A. Une description des entêtes et des tags d'option déjà déclarés auprès de l'IANA et pouvant être contenus dans les messages échangés selon le protocole SIP est donnée dans le document intitulé « RFC 3261 - SIP : Session Initiation Protocol », édité par l'IETF.

Dans le premier mode de réalisation décrit ici, on inclut dans l'entête Supported du message M1, un tag d'option par exemple *rd,* déclaré de façon appropriée au préalable auprès de l'IANA et indiquant au coeur de réseau 2 que le terminal 3A implémente (i.e. supporte) un procédé de terminaison d'appel conforme à l'invention.

Par ailleurs, est véhiculée également ici dans le message M1, la durée de temporisation T_{déf} par défaut prédéfinie au niveau du terminal 3A, par exemple dans un autre entête du message, noté Racdec, défini au préalable de façon appropriée auprès de l'IANA.

Un exemple du contenu du message M1 est donné en annexe.

Sur réception du message M1 par le serveur S-CSCF du coeur de réseau 2, les entêtes du message M1 sont lus et analysés. Cette analyse lui permet, par lecture de l'entête Supported et du tag d'option *rd,* de détecter que le terminal 3A supporte le procédé de terminaison d'un appel selon l'invention (étape F20). Suite à cette détection, le serveur S-CSCF du coeur de réseau 2 stocke cette information en mémoire et interroge sa mémoire pour obtenir la durée de temporisation Tₜₑₘₚₒ à transmettre au terminal 3A.

En variante, l'analyse du message M1 et l'obtention de la durée de temporisation peuvent être mises en oeuvre par un serveur d'application du réseau IMS.

Le serveur S-CSCF envoie alors, en réponse au message M1, un message M2 200 OK (étape F30), comprenant notamment :
- un entête Require dans lequel il place le tag d'option *rd* pour confirmer au terminal 3A qu'il a bien détecté que celui-ci supportait le procédé de terminaison selon l'invention ; et
- un entête Racdec dans lequel il place la durée de temporisation Tₜₑₘₚₒ imposée par le coeur de réseau 2 et que le terminal 3A doit appliquer au cours du procédé de terminaison d'un appel selon l'invention.
Ce message de réponse M2 intègre également, comme décrit précédemment, la durée pendant laquelle le terminal 3A est considéré comme enregistré par le coeur de réseau 2 (par exemple ici 1h, c'est-à-dire 3600s). De façon connue, cette durée est contenue dans le paramètre « expires » de l'entête « Contact » du message de réponse M2.

Un exemple du contenu du message M2 est donné en annexe.

Sur réception du message M2, le terminal 3A extrait la durée de temporisation Tₜₑₘₚₒ placée dans l'entête Racdec et mémorise cette durée, par exemple dans sa mémoire vive 33 (étape F40).

De façon similaire, le terminal 3B s'enregistre auprès du coeur de réseau 2, en envoyant un message SIP REGISTER M3, transporté dans le réseau par un signal conforme à l'invention, et comprenant dans l'entête Supported, le tag d'option *rd* indiquant au coeur de réseau 2 qu'il supporte le procédé de terminaison d'un appel selon l'invention, ainsi qu'un entête Racdec dans lequel se trouve la valeur par défaut T_{déf} prédéfinie au niveau du terminal 3B (étape F50).

Les étapes :
- d'analyse du message d'enregistrement M3 par le serveur S-CSCF du coeur de réseau 2 (étape F60) ;
- d'envoi d'un message de réponse M4 au message M3 du terminal 3B (étape F70), comprenant la durée de temporisation Tₜₑₘₚₒ imposée par le coeur de réseau 2 que le terminal 3B doit appliquer au cours du procédé de terminaison d'un appel selon l'invention ; et
- d'extraction et de mémorisation de la valeur Tₜₑₘₚₒ par le terminal 3B (étape F80) ;
sont similaires aux étapes respectives F20, F30 et F40 décrites précédemment pour le terminal 3A.

Ainsi, à l'issue des étapes F40 et F80, les terminaux 3A et 3B connaissent la durée de temporisation Tₜₑₘₚₒ à appliquer au cours du procédé de terminaison d'appel selon l'invention, c'est-à-dire la durée prédéterminée qu'il leur faudra attendre avant d'émettre un message de libération des ressources allouées à un appel suite à un raccrochage détecté au cours de cet appel.

Dans le premier mode de réalisation décrit ici, la durée de temporisation Tₜₑₘₚₒ est transmise par le coeur de réseau aux terminaux de voix sur IP implémentant le procédé selon l'invention, au moment de l'enregistrement de ces terminaux par le coeur de réseau. De manière générale, l'enregistrement d'un terminal de voix sur IP auprès d'un coeur de réseau est temporaire (par exemple ici pour 1h). Aussi, la durée de temporisation Tₜₑₘₚₒ pourra être transmise par le coeur de réseau et mémorisée dans le terminal de voix sur IP à chaque rafraîchissement de l'enregistrement.

Un second mode de réalisation est maintenant décrit en référence à la figure 4 pour configurer, sous le contrôle du coeur de réseau 2, la durée de temporisation Tₜₑₘₚₒ dans les terminaux VoIP. Dans ce second mode de réalisation, la durée de temporisation Tₜₑₘₚₒ est transmise par le coeur de réseau 2 :
- dans le message d'initiation d'appel transmis au terminal appelé 3B ; et
- dans le message d'appel en cours ou de décrochage transmis au terminal appelant 3A.

On suppose ici que le terminal 3A envoie au coeur de réseau 2 un message M5 d'initiation d'appel utilisant la méthode SIP INVITE pour établir un appel avec le terminal 3B (étape G10). Ce message M5 est transporté sur le réseau dans un signal conforme à l'invention.

Dans le second mode de réalisation décrit ici, de façon similaire au premier mode de réalisation pour le message SIP REGISTER, le message INVITE M5 comporte un entête Supported dans lequel le terminal 3A aura avantageusement placé le tag d'option *rd* pour indiquer au coeur de réseau 2 qu'il supporte un procédé de terminaison d'appel conforme à invention.

Par ailleurs, est comprise également ici dans le message M5 la durée de temporisation par défaut T_{déf} prédéfinie au niveau du terminal, par exemple dans un entête Racdec défini au préalable de façon approprié auprès de l'IANA.

Sur réception du message M5, les entêtes du message M5 sont lus et analysés par le serveur S-CSCF du coeur de réseau 2. Le serveur S-CSCF mémorise alors l'information selon laquelle le terminal 3A supporte le procédé de terminaison selon l'invention (étape G20), de sorte à lui transmettre ultérieurement, en réponse au message d'appel M5, la durée de temporisation à appliquer au cours du procédé.

Le serveur S-CSCF transfère ensuite le message d'initiation d'appel INVITE M5 vers le terminal appelé 3B (étape G30) sous la forme d'un message d'initiation d'appel INVITE M6. Dans ce message M6, est précisée en outre la durée de temporisation Tₜₑₘₚₒ qu'est censé appliquer le terminal 3B au cours du procédé de terminaison selon l'invention si ce terminal 3B supporte ce procédé. A ce stade des échanges en effet, le serveur S-CSCF du coeur de réseau 2 ne sait pas si le terminal 3B supporte le procédé selon l'invention. La durée de temporisation Tₜₑₘₚₒ a été obtenue après interrogation de la mémoire du serveur S-CSCF. En variante, elle peut être obtenue en interrogeant un serveur d'application du réseau IMS 1.

La durée de temporisation Tₜₑₘₚₒ est transmise dans l'entête Racdec du message M6, en remplacement de la durée T_{déf} transmise par le terminal 3A dans le message M5. En variante, elle peut être placée dans un autre entête du message M6, préalablement défini de façon appropriée auprès de l'IANA.

Sur réception du message M6, le terminal 3B extrait la durée de temporisation Tₜₑₘₚₒ et la mémorise par exemple dans sa mémoire vive 33 (étape G40), afin de l'utiliser au cours du procédé de terminaison selon l'invention (à la place de la durée par défaut T_{déf} prédéfinie dans la mémoire 34 du terminal 3B).

Il envoie par ailleurs au serveur S-SCSF du coeur de réseau 2 (via le serveur P-CSCF), un message de réponse M7 (180 RINGING) au message M6 confirmant que l'appel est en cours (message perçu par l'utilisateur du terminal par exemple sous la forme d'une sonnerie) (étape G50). Ce message M7 est transporté sur le réseau dans un signal conforme à l'invention. Le message de réponse M7 comprend ici, dans l'entête Require le tag d'option rd, indiquant ainsi au coeur de réseau 2 qu'il supporte bien le procédé de terminaison d'appel selon l'invention et qu'il sera mis en oeuvre lors du raccrochage. En outre, le terminal 3B indique dans le message de réponse M7, par exemple dans l'entête Racdec du message, la durée de temporisation qui sera appliquée par le terminal 3B au cours du procédé de terminaison selon l'invention, à savoir ici la durée Tₜₑₘₚₒ transmise par le coeur de réseau 2.

Sur réception du message M7, le serveur S-CSCF fixe la durée de temporisation à transmettre au terminal appelant 3A (étape G60), en consultant sa mémoire. Dans l'exemple décrit ici, cette durée de temporisation est la durée Tₜₑₘₚₒ précédemment obtenue pour le terminal 3B. Ainsi de façon avantageuse, une durée de temporisation homogène est fixée pour chaque terminal de voix sur IP du réseau IMS 1. En variante, une durée de temporisation différente peut être obtenue pour les terminaux 3A et 3B.

Cette durée de temporisation Tₜₑₘₚₒ est transmise au terminal 3A dans un message M8 (180 RINGING) (étape G70), dans l'entête Racdec de ce message. Le tag d'option *rd* précisant que le mécanisme de terminaison selon l'invention doit être mis en oeuvre par le terminal 3A au raccrochage est quant à lui transmis dans l'entête Require. Le message M8 indique au terminal 3A que l'appel à destination du terminal 3B est en cours (message perçu par l'utilisateur du terminal 3A par exemple sous la forme d'une sonnerie).

Sur réception du message M8, le terminal 3A extrait la durée de temporisation Tₜₑₘₚₒ et la mémorise par exemple dans sa mémoire vive 33 (étape G80), afin de l'utiliser au cours du procédé de terminaison selon l'invention (à la place de la durée par défaut T_{déf} prédéfinie dans la mémoire 34 du terminal 3A).

On suppose maintenant que l'utilisateur du terminal 3B décroche son terminal suite à l'appel du terminal 3A (étape G90). Ce décrochage est détecté de façon connue de l'homme du métier par l'automate SIP du terminal 3B, et a pour conséquence l'allocation de ressources dédié à cet appel au niveau du terminal 3B.

Le décrochage est ensuite signalé par le terminal 3B au coeur de réseau 2 dans un message de notification de décrochage M9 (200 OK) (étape G100). Le message de décrochage M9 comporte dans l'entête Racdec la durée de temporisation Tₜₑₘₚₒ appliquée par le terminal 3B.

Le message M9 est transféré sous la forme d'un message de notification de décrochage M10 (200 OK) par le coeur de réseau 2 au terminal 3A après allocation des ressources dédiées à l'appel par le coeur de réseau 2 (étape G110). Le message M10 comporte dans l'entête Racdec la durée de temporisation Tₜₑₘₚₒ que doit appliquer le terminal 3A.

Sur réception du message M10, le terminal 3A alloue les ressources nécessaires à l'appel.

Dans les deux modes de réalisation décrits ici, l'indication comprise dans les messages SIP M1 et M5, respectivement M3 et M7, véhiculés par les signaux conformes à l'invention, et selon laquelle le terminal 3A, respectivement le terminal 3B, supporte le procédé de terminaison selon l'Invention, est contenue dans un entête Supported ou Require. Ces hypothèses ne sont en aucun cas limitatives.

En variante, en effet, cette indication peut être comprise dans un autre entête du message véhiculé par le signal conforme à l'invention. Par exemple, cette indication peut être comprise dans l'entête Racdec du message lui-même. Notamment, la présence de cet entête dans le message émis par le terminal constitue en soi une indication que le terminal supporte le procédé de terminaison selon l'invention. Par ailleurs, des paramètres additionnels dans l'entête Racdec pourraient être introduits, par exemple pour préciser si le réseau souhaite ou non mettre en oeuvre le mécanisme.

### ANNEXE

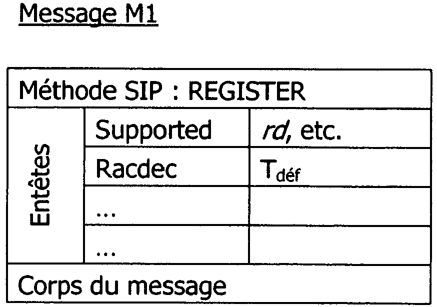

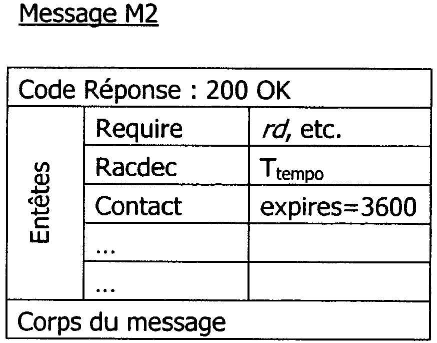

## Revendications

1. Procédé de terminaison d'un appel, mis en oeuvre par un terminal de voix sur IP (3A,3B) enregistré auprès d'un coeur de réseau IP (2), ledit procédé comportant :
- une étape de détection (E40) d'un raccrochage dudit terminal (3A,3B) au cours dudit appel ; et
- une étape d'envoi (E80) à un dispositif dudit coeur de réseau IP (2) d'un message de libération des ressources allouées audit appel ;
ledit procédé étant **caractérisé en ce qu'**il comporte, suite à ladite étape de détection (E40), une étape d'attente (E50) d'une durée prédéterminée avant l'envoi dudit message de libération, et **en ce que** ledit message de libération est envoyé (E80) à l'issue de ladite étape d'attente si aucun décrochage dudit terminal (3A,3B) n'a été détecté pendant ladite durée prédéterminée.

2. Procédé de terminaison selon la revendication 1, **caractérisé en ce que** ladite durée prédéterminée est fixée (F30,F70,G30,G70) dans un message reçu (M2,M4,M6,M8,M10) par ledit terminal (3A,3B) et provenant d'un dispositif dudit coeur de réseau IP (2).

3. Procédé de terminaison selon la revendication 2 dans lequel ledit terminal est un terminal appelé (3B) pour ledit appel, **caractérisé en ce que** ledit message reçu fixant ladite durée prédéterminée (G30) est un message d'initiation dudit appel (M6).

4. Procédé de terminaison selon la revendication 2 dans lequel ledit terminal est un terminal appelant (3A) pour ledit appel, **caractérisé en ce que** ledit message reçu fixant ladite durée prédéterminée (G70) est un message de notification d'un appel en cours (M8) ou un message de notification d'un décrochage par un terminal appelé (3B) pour ledit appel (M10).

5. Procédé de terminaison selon la revendication 2, **caractérisé en ce que** ledit message reçu fixant ladite durée prédéterminée (F30,F70) est un message de réponse à une étape d'enregistrement (F10,F50) dudit terminal (3A,3B) auprès dudit coeur de réseau (2).

6. Procédé de terminaison selon l'une quelconque des revendications 2 à 5, **caractérisé en ce que** ladite durée prédéterminée est comprise dans un entête dudit message reçu.

7. Procédé de terminaison selon la revendication 1, dans lequel ladite durée prédéterminée est configurable au niveau dudit terminal.

8. Procédé de terminaison selon la revendication 1, dans lequel ladite durée prédéterminée est prédéfinie dans ledit terminal.

9. Programme d'ordinateur comportant des instructions pour l'exécution des étapes du procédé de terminaison selon l'une quelconque des revendications 1 à 8 lorsque ledit programme est exécuté par un ordinateur.

10. Support d'enregistrement lisible par un ordinateur sur lequel est enregistré un programme d'ordinateur comprenant des instructions pour l'exécution des étapes du procédé de terminaison selon l'une quelconque des revendications 1 à 8.

11. Terminal de voix sur IP (3A,3B), enregistré auprès d'un coeur de réseau IP (2), comportant :
- des moyens de détection d'un raccrochage dudit terminal (3A,3B) au cours d'un appel ; et
- des moyens d'envoi à un dispositif dudit coeur de réseau IP (2) d'un message de libération des ressources allouées audit appel ;
ledit terminal étant **caractérisé en ce qu'**il comporte en outre :
- des moyens de temporisation dudit envoi pendant une durée prédéterminée suite à la détection dudit raccrochage ;
- des moyens de détection d'un décrochage dudit terminal ;
et **en ce que** lesdits moyens d'envoi sont adaptés à envoyer ledit message de libération audit dispositif du coeur de réseau (2) à l'issue de la durée prédéterminée si aucun décrochage n'a été détecté par lesdits moyens de détection d'un décrochage pendant ladite durée prédéterminée.

12. Terminal de voix sur IP (3A,3B) selon la revendication 11, **caractérisé en ce qu'**il comprend un équipement téléphonique analogique raccordé à un convertisseur/adaptateur protocolaire de voix sur IP.

13. Système de communications comprenant un terminal de voix sur IP (3A,3B) selon l'une quelconque des revendications 11 à 12 et :
- des moyens pour recevoir dudit terminal, un message (M1,M3,M5,M7) comportant une indication que ledit terminal (3A,3B) est adapté à attendre une durée prédéterminée avant d'émettre un message de libération des ressources liées à un appel suite à une détection d'un raccrochage dudit terminal au cours dudit appel, et à envoyer ledit message de libération à l'issue de ladite durée prédéterminée si aucun décrochage n'a été détecté pendant ladite durée prédéterminée ;
- des moyens pour obtenir ladite durée prédéterminée ; et
- des moyens pour envoyer ladite durée prédéterminée audit terminal dans un message (M2,M4,M6,M8,M10) ;
lesdits moyens étant répartis dans un ou plusieurs dispositifs d'un coeur d'un réseau de communications IP (2) dudit système.

14. Signal comprenant un message (M1,M3,M5,M7) et envoyé par un terminal de voix sur IP à un dispositif d'un coeur d'un réseau de communications IP, **caractérisé en ce que** ledit message comporte un entête comprenant une indication que ledit terminal est adapté à attendre une durée prédéterminée avant d'émettre un message de libération des ressources liées à un appel suite à une détection d'un raccrochage dudit terminal au cours dudit appel, et à envoyer ledit message de libération à l'issue de ladite durée prédéterminée si aucun décrochage n'a été détecté pendant ladite durée prédéterminée.

15. Signal selon la revendication 14, **caractérisé en ce qu'**il comporte en outre un autre entête comprenant une valeur pour ladite durée prédéterminée.

## Patentansprüche

1. Verfahren zur Beendung eines Rufs, das von einem Voice-over-IP-Endgerät (3A, 3B) umgesetzt wird, das bei einem IP-Netzwerkkern (2) registriert wird, wobei das Verfahren Folgendes aufweist:
- einen Schritt des Erkennens (E40) eines Abnehmens des Endgeräts (3A, 3B) während des Rufs; und
- einen Schritt des Sendens (E80) an eine Vorrichtung des IP-Netzwerkkerns (2) einer Nachricht der Freigabe der Ressourcen, die dem Ruf zugeteilt werden;
wobei das Verfahren **dadurch gekennzeichnet ist, dass** es nach dem Schritt des Erkennens (E40) einen Schritt des Wartens (E50) für eine vorbestimmte Zeitdauer vor dem Senden der Nachricht der Freigabe aufweist und dass die Nachricht der Freigabe nach dem Schritt des Wartens gesendet wird (E80), wenn während der vorbestimmten Zeitdauer kein Abnehmen des Endgeräts (3A, 3B) erkannt worden ist.

2. Verfahren zur Beendung nach Anspruch 1, **dadurch gekennzeichnet, dass** die vorbestimmte Zeitdauer in einer Nachricht (M2, M4, M6, M8, M10), die von dem Endgerät (3A, 3B) empfangen wird und von einer Vorrichtung des IP-Netzwerkkerns (2) kommt, festgelegt wird (F30, F70, G30, G70).

3. Verfahren zur Beendung nach Anspruch 2, wobei das Endgerät ein Endgerät ist, das für diesen Ruf gerufen wird (3B), **dadurch gekennzeichnet, dass** die empfangene Nachricht, die die vorbestimmte Zeitdauer (G30) festlegt, eine Nachricht zum Auslösen des Rufs (M6) ist.

4. Verfahren zur Beendung nach Anspruch 2, wobei das Endgerät ein rufendes Endgerät (3A) für diesen Ruf ist, **dadurch gekennzeichnet, dass** die empfangene Nachricht, die die vorbestimmte Zeitdauer (G70) festlegt, eine Mitteilungsnachricht eines laufenden Rufs (M8) oder eine Mitteilungsnachricht eines Abnehmens durch ein gerufenes Endgerät (3B) für den Ruf (M10) ist.

5. Verfahren zur Beendung nach Anspruch 2, **dadurch gekennzeichnet, dass** die empfangene Nachricht, die die vorbestimmte Zeitdauer (F30, F70) festlegt, eine Antwortnachricht auf einen Schritt des Registrierens (F10, F50) des Endgeräts (3A, 3B) bei dem Netzwerkkern (2) ist.

6. Verfahren zur Beendung nach einem der Ansprüche 2 bis 5, **dadurch gekennzeichnet, dass** die vorbestimmte Zeitdauer in einem Header der empfangenen Nachricht enthalten ist.

7. Verfahren zur Beendung nach Anspruch 1, wobei die vorbestimmte Zeitdauer an dem Endgerät konfigurierbar ist.

8. Verfahren zur Beendung nach Anspruch 1, wobei die vorbestimmte Zeitdauer in dem Endgerät festgelegt wird.

9. Computerprogramm, das Anweisungen zum Durchführen der Schritte des Verfahrens zur Beendung nach einem der Ansprüche 1 bis 8 aufweist, wenn das Programm auf einem Computer ausgeführt wird.

10. Computerlesbares Aufzeichnungsmedium, auf dem ein Computerprogramm gespeichert ist, das die Anweisungen zum Durchführen der Schritte des Verfahrens zur Beendung nach einem der Ansprüche 1 bis 8 aufweist.

11. Voice-over-IP-Endgerät (3A, 3B), das bei einem IP-Netzwerkkern (2) registriert ist, das Folgendes aufweist:
- Mittel zum Erkennen eines Abnehmens des Endgeräts (3A, 3B) während eines Rufs; und
- Mittel zum Senden an eine Vorrichtung des IP-Netzwerkkerns (2) einer Nachricht der Freigabe der Ressourcen, die dem Ruf zugeteilt sind;
wobei das Endgerät **dadurch gekennzeichnet ist, dass** es ferner Folgendes aufweist:
- Mittel zum Verzögern des Sendens während einer vorbestimmten Zeitdauer im Anschluss an das Erkennen des Abnehmens;
- Mittel zum Erkennen eines Abnehmens des Endgeräts;
und dadurch, dass die Mittel zum Senden geeignet sind, die Nachricht der Freigabe nach der vorbestimmten Zeitdauer an die Vorrichtung des Netzwerkkerns (2) zu senden, wenn von den Mitteln zum Erkennen eines Abnehmens kein Abnehmen während der vorbestimmten Zeitdauer erkannt worden ist.

12. Voice-over-IP-Endgerät (3A, 3B) nach Anspruch 11, **dadurch gekennzeichnet, dass** es eine analoge Telefonausrüstung aufweist, die an einen Voice-over-IP-Protokollwandler/-adapter angeschlossen ist.

13. Kommunikationssystem, umfassend ein Voice-over-IP-Endgerät (3A, 3B) nach einem der Ansprüche 11 bis 12 und:
- Mittel, um von dem Endgerät eine Nachricht (M1, M3, M5, M7) zu empfangen, die einen Hinweis aufweist, dass das Endgerät (3A, 3B) geeignet ist, eine vorbestimmte Zeitdauer zu warten, bevor es eine Nachricht der Freigabe der Ressourcen, die mit einem Ruf verbunden sind, infolge eines Erkennens eines Abnehmens des Endgeräts während des Rufs sendet, und die Nachricht der Freigabe nach der vorbestimmten Zeitdauer zu senden, wenn kein Abnehmen während der vorbestimmten Zeitdauer erkannt worden ist;
- Mittel zum Erhalten der vorbestimmten Zeitdauer; und
- Mittel zum Senden der vorbestimmten Zeitdauer an das Endgerät in einer Nachricht (M2, M4, M6, M8, M10);
wobei die Mittel in einer oder mehreren Vorrichtungen eines Kerns eines IP-Kommunikationsnetzwerks (2) des Systems verteilt sind.

14. Signal, umfassend eine Nachricht (M1, M3, M5, M7), das von einem Voice-over-IP-Endgerät an eine Vorrichtung eines Kerns eines IP-Kommunikationsnetzwerks gesendet wird, **dadurch gekennzeichnet, dass** die Nachricht einen Header aufweist, der einen Hinweis aufweist, dass das Endgerät geeignet ist, eine vorbestimmte Zeitdauer zu warten, bevor es eine Nachricht der Freigabe der Ressourcen, die mit einem Ruf verbunden sind, infolge eines Erkennens eines Abnehmens des Endgeräts während des Rufs sendet, und die Nachricht der Freigabe nach der vorbestimmten Zeitdauer zu senden, wenn kein Abnehmen während der vorbestimmten Zeitdauer erkannt worden ist.

15. Signal nach Anspruch 14, **dadurch gekennzeichnet, dass** es ferner einen anderen Header aufweist, der einen Wert für die vorbestimmte Zeitdauer aufweist.

## Claims

1. Method of termination of a call, implemented by a Voice over IP terminal (3A,3B) registered with an IP network core (2), said method comprising:
- a step (E40) of detecting a hanging up of said terminal (3A,3B) during said call; and
- a step (E80) of dispatching to a device of said IP network core (2) a freeing message in respect of the resources allocated to said call;
said method being **characterized in that** it comprises, subsequent to said detecting step (E40), a step (E50) of waiting for a predetermined duration before the dispatching of said freeing message, and **in that** said freeing message is dispatched (E80) on completion of said waiting step if no pickup of said terminal (3A,3B) has been detected in the course of said predetermined duration.

2. Method of termination according to Claim 1, **characterized in that** said predetermined duration is fixed (F30,F70,G30,G70) in a message received (M2,M4,M6,M8,M10) by said terminal (3A,3B) and originating from a device of said IP network core (2).

3. Method of termination according to Claim 2, in which said terminal is a called terminal (3B) for said call, **characterized in that** said message received fixing said predetermined duration (G30) is an initiation message in respect of said call (M6).

4. Method of termination according to Claim 2, in which said terminal is a calling terminal (3A) for said call, **characterized in that** said message received fixing said predetermined duration (G70) is a notification message in respect of a call in progress (M8) or a notification message in respect of a pickup by a called terminal (3B) for said call (M10).

5. Method of termination according to Claim 2, **characterized in that** said message received fixing said predetermined duration (F30,F70) is a message of response to a step (F10,F50) of registering said terminal (3A, 3B) with said network core (2).

6. Method of termination according to any one of Claims 2 to 5, **characterized in that** said predetermined duration is included in a header of said message received.

7. Method of termination according to Claim 1, in which said predetermined duration is configurable at the level of said terminal.

8. Method of termination according to Claim 1, in which said predetermined duration is predefined in said terminal.

9. Computer program comprising instructions for the execution of the steps of the method of termination according to any one of Claims 1 to 8 when said program is executed by a computer.

10. Recording medium readable by a computer on which is recorded a computer program comprising instructions for the execution of the steps of the method of termination according to any one of Claims 1 to 8.

11. Voice over IP terminal (3A,3B), registered with an IP network core (2), comprising:
- means for detecting a hanging up of said terminal (3A, 3B) during a call; and
- means for dispatching to a device of said IP network core (2) a freeing message in respect of the resources allocated to said call;
said terminal being **characterized in that** it furthermore comprises:
- means for deferring said dispatching for a predetermined duration subsequent to the detection of said hanging up;
- means for detecting a pickup of said terminal;
and **in that** said dispatching means are adapted to dispatch said freeing message to said device of the network core (2) on completion of the predetermined duration if no pickup has been detected by said means for detecting a pickup in the course of said predetermined duration.

12. Voice over IP terminal (3A, 3B) according to Claim 11, **characterized in that** it comprises an analogue telephone apparatus hooked up to a Voice over IP protocol converter/adaptor.

13. Communications system comprising a Voice over IP terminal (3A, 3B) according to any one of Claims 11 to 12 and:
- means for receiving from said terminal, a message (M1,M3,M5,M7) comprising an indication that said terminal (3A,3B) is adapted to wait a predetermined duration before emitting a freeing message in respect of the resources related to a call subsequent to a detection of a hanging up of said terminal during said call, and to dispatch said freeing message on completion of said predetermined duration if no pickup has been detected in the course of said predetermined duration;
- means for obtaining said predetermined duration; and
- means for dispatching said predetermined duration to said terminal in a message (M2,M4,M6,M8,M10);
said means being distributed in one or more devices of a core of an IP communications network (2) of said system.

14. Signal comprising a message (M1,M3,M5,M7) and dispatched by a Voice over IP terminal to a device of a core of an IP communications network, **characterized in that** said message comprises a header comprising an indication that said terminal is adapted to wait a predetermined duration before emitting a freeing message in respect of the resources related to a call subsequent to a detection of a hanging up of said terminal during said call, and to dispatch said freeing message on completion of said predetermined duration if no pickup has been detected in the course of said predetermined duration.

15. Signal according to Claim 14, **characterized in that** it furthermore comprises another header comprising a value for said predetermined duration.
